# EUROPÄISCHE PATENTSCHRIFT

(11) **EP 3 327 884 B1**
(45) Veröffentlichungstag und Bekanntmachung des Hinweises auf die Patenterteilung: **11.01.2023**
(21) Anmeldenummer: 17200923.5
(22) Anmeldetag: 09.11.2017
(51) Int. Cl.: H02G 3/06, H02G 3/08

(54) **ROHREINFÜHRUNG**
PIPE INTRODUCTION
INSERTION DE TUBE

(30) Priorität: 28.11.2016 CH 15622016
(43) Veröffentlichungstag der Anmeldung: 30.05.2018
(73) Patentinhaber: Agro AG, 5502 Hunzenschwil (CH)
(72) Erfinder: Meier, Niklaus, 5037 Muhen (CH)
(74) Vertreter: Rentsch Partner AG

(56) Entgegenhaltungen:
- EP-A1- 3 026 766
- US-A- 5 180 072

## Beschreibung

### GEBIET DER ERFINDUNG

Die Erfindung betrifft Rohreinführungen für Installationsdosen.

### HINTERGRUND DER ERFINDUNG

Um elektrische Schalter, Steckdosen, Lampen, Apparate oder Verzweigungen an den dazu vorgesehenen Stellen in einem Gebäude eines Bauwerkes anzubringen zu können werden unter anderem Installationsdosen verwendet, die z.B. einbetoniert oder anderweitig befestigt werden. Unter solchen Installationsdosen werden beispielsweise Unterputzdosen, Einlasskästen, Deckendübel, Unterputzabzweigdosen, Verteilerdosen und dergleichen verstanden. Die Installationsdosen weisen typischerweise ein zylinder- oder quaderförmiges Gehäuse mit Boden auf, welches einen über eine Bedienöffnung zugänglichen Anschlussraum ausbildet. Umfangsseitig in der Seitenwand oder im Boden weisen sie zudem oft eine Mehrzahl von Rohreinführungen in Form von Muffen und Adaptern auf, welche typischerweise zur Befestigung von Kabelschutzschläuchen zur Durchführung von Anschlusskabeln ausgebildet sind.

Bei den Rohreinführungen sind verschiedene Eigenschaften erwünscht, welche unter anderem einfache Handhabung, verlässliche Halterung von angeschlossenen Rohren bzw. Kabelschutzschläuchen, gute Abdichtung des Inneren der Installationsdose z.B. gegenüber noch frischem Frischbeton usw. umfassen. In der Regel weisen die Rohreinführungen Verschlusselemente auf, welche das Innere der Installationsdose gegenüber Frischbeton abdichten und bei Bedarf für den Anschluss eines Kabelschutzschlauches entfernt werden können. Die Entfernung der Verschlusselemente und der Anschluss eines Kabelschutzschlauches sollen dabei möglichst einfach sein.

Vom gleichen Anmelder ist bereits die Patentanmeldung EP3026766A1 bekannt, welche eine Rohreinführung für eine Unterputzdose offenbart. Diese weist eine Öffnung zum Wirkverbinden eines Kabelschutzschlauches mit der Unterputzdose auf. Weiterhin sind ein Verschlusselement zum Verschliessen der Öffnung, ein Haltemittel zur Befestigung des Kabelschutzschlauches an der Unterputzdose, sowie ein Dichtelement zur Abdichtung der Öffnung gegenüber dem Kabelschutzschlauch vorhanden.

Aus dem Stand der Technik sind weiterhin Installationsdosen mit herkömmlichen Deckel zum Verschliessen bekannt. Ein Beispiel hierfür ist die NL1034797C veröffentlicht am 27.12.2007 von ABB, welche eine Unterputzdose mit multiplen Mündungen zur Aufnahme eines Installationsrohres offenbart welche von den Seitenwänden abgehen. Ein Membran oder ein bewegbaren Deckel ist von der Seitenwand beabstandet am Ende der Mündungen angebracht um die jeweilige Öffnung zu verschliessen.

### BESCHREIBUNG DER ERFINDUNG

Eine Aufgabe der Erfindung ist es, den Stand der Technik von Rohreinführungen für Installationsdosen zu verbessern. Diese Aufgabe wird durch die im unabhängigen Patentanspruch 1 definierte Rohreinführung gelöst.

Die Ausführungsform der Erfindung betrifft eine Rohreinführung für eine Installationsdose. Die Rohreinführung weist einen röhrenförmigen Grundkörper mit einer Mittelachse und einer Öffnung zur Aufnahme eines Rohres auf. Weiterhin weist sie einen Deckel zum Verschliessen der Öffnung auf. Der Deckel hat in einer Ausführungsvariante eine Grundplatte und einen daran angeformten Stopfen, welcher in einer Schliessstellung in die Öffnung hineinragt. Es ist mindestens ein Bedienelement an einer Aussenseite des röhrenförmigen Grundkörpers angebracht. Das Bedienelement zeichnet sich dadurch aus, dass an diesem eine Kraft, bzw. eine Deformation am Grundkörper eingeleitet werden kann, z.B. indem ein Installateur manuell mit seiner Hand auf das Bedienelement drückt. Das mindestens eine Bedienelement wirkt mit mindestens einem dazugehörigen Gegenelement zusammen, welches im Wesentlichen diametral gegenüber von dem jeweiligen Bedienelement angeordnet ist. Hierbei ist eine im Wesentlichen gleiche axiale Positionierung in Richtung der Mittelachse des Grundkörpers zwar wünschenswert jedoch nicht zwingend Voraussetzung. Das Gegenelement dient dazu, der über das Bedienelement eingeleiteten Kraft, bzw. Deformation, ein mechanisches Widerlager zu bieten, welches eine ungewollte Verschiebung des Deckels in diese Richtung verhindert. Dies kann beispielsweise durch eine lokale Verstärkung der Struktur erzielt werden. Bei diesem gegenseitigen Zusammenschieben des Bedienelementes und des entsprechenden Gegenelementes in die erste Richtung wird die Grundplatte des Deckels durch Zusammenwirken des Deckels mit einer der Innenkanten der Öffnung des Grundkörpers über eine Rampe abgehoben, so dass der Stopfen aus der Öffnung geschoben wird. Entsprechend der Erfindung entfernen sich beim Zusammenschieben des Bedienelementes und des Gegenelementes die transversal dazu angeordneten Seitenbereiche des Grundkörpers voneinander, welche bezüglich einer Umfangsrichtung des Grundkörpers um ca. 90° zu dem Bedienelement, respektive dem Gegenelement versetzt sind, d.h. es findet eine temporäre lokale Ovalisierung des Grundkörpers statt. Wenn das Bedienelement nicht mehr betätigt wird, wird die durch das Zusammenschieben erfolgte Deformation des Grundkörpers aufgehoben und der Grundkörper kehrt reversibel in seine ursprüngliche Form zurück. Entsprechend der Erfindung sind die Bedienelemente und die Gegenelemente am Grundkörper angeformt. Eine Installationsdose kann mehrere Rohreinführungen der beschriebenen Art aufweisen.

In einer bevorzugten Variante ist das Gegenelement ebenfalls als ein Bedienelement ausgeführt. Bei dieser Variante wird demnach eine Kraft und eine Gegenkraft an zwei im Wesentlichen gegenüber voneinander angeordneten Punkten eingeleitet, so dass durch das Zusammendrücken respektive des Zusammenschiebens des Grundkörpers dieser so verformt, dass die beiden zusammenwirkenden Bedienelemente sind näher aufeinander zubewegen.

Durch eine temporäre Ovalisierung des Grundkörpers gegenüber dem formtreuen Deckel wird bewirkt, dass bestimmte Teile des Deckels bzw. des Grundkörpers zeitweise miteinander in Wirkverbindung treten. Die radiale Verschiebung der Innen, bzw. Aussenseite des röhrenförmigen Grundkörpers wird dahingehend genutzt, dass mindestens eine abgeschrägte Rampe welche an dem Deckel (oder dem Grundkörper) angebracht sind, welche durch die Verformung des Grundkörpers mit dem jeweiligen anderer Teil in Wirkverbindung treten und die radiale Verformung des Grundkörpers über diese Rampen in ein Abheben des Deckels vom Grundkörper umsetzten. Generell ist es möglich, die Rampen entweder am Grundkörper oder am Deckel anzubringen. Ebenfalls können die Rampen entweder in einer Region der Rohreinführung angeordnet sein, bei der die jeweilige Wirkverbindung durch die Bewegung des Grundkörpers radial nach innen und/oder radial nach aussen aufgebaut wird. Beim Bedienen des mindestens einen Bedienelementes soll der Deckel über diese Rampen abgleiten und so aus der Öffnung gehoben werden.

In Ergänzung kann der röhrenförmige Grundkörper auch mindestens ein Bedienelement aufweisen, welches in der Form eines flexiblen nachgiebigen Teiles z.B. der Bewandung des Grundkörpers ausgeführt ist. Somit behält der röhrenförmige Grundkörper grösstenteils seine grundsätzliche Form bei, mit Ausnahme des nachgiebigen Bedienelementes an dessen Innenseite die mindestens eine Rampe anordnet ist. Dadurch kann sich diese ebenfalls durch Betätigen des Bedienelementes radial nach innen verschieben und - wie beschrieben - in Wirkverbindung mit dem Deckel treten. Bei dieser Variante wird der Grundkörper beim Betätigen nicht so stark deformiert.

Es kann förderlich sein, wenn der Deckel oder der Grundkörper ein Interaktionselement aufweist, welches beim Betätigen mit der mindestens einen Rampe in Wirkverbindung tritt und das Abgleiten erleichtert. Dies kann beispielweise durch ein Interaktionselement erreicht werden, welches zu den Rampen komplementär abgeflacht und/oder ebenfalls rampenförmig ausgebildet ist.

In einer Variante sind eine erste und eine zweite Rampe, welche einander gegenüberliegend sind, zwischen dem Deckel und dem Grundkörper angeordnet. Die erste Rampe ist zumindest in Schliessstellung des Deckels mit dem mindestens einen Bedienelement und die zweite Rampe zumindest in Schliessstellung des Deckels mit dem Gegenelement wirkverbunden. Dies bewirkt, dass beim Zusammenschieben des Bedien- und des Gegenelementes, welches wie oben beschrieben alternativ auch ein weiteres Bedienelement sein kann, die Grundplatte durch mindestens eine der Rampen von der Öffnung abgehoben werden kann. Bevorzugterweise fluchten die erste und die zweite Rampe mit dem mindestens einem Bedienelement und dem entsprechenden Gegenelement bzw. alternativ dem mit dem ersten Bedienelement zusammenwirkenden zweiten Bedienelement. Die Rampen bewirken hierbei eine Umleitung des eingeleiteten Kraftflusses, respektive ein Abgleiten dieser an der Innenseite des Grundkörpers, was ein Ausstossen des Stopfens aus der Öffnung des Grundkörpers der Rohreinführung bewirkt, so dass die Grundplatte beim Öffnen des Deckels von der Öffnung abgehoben wird.

In einer Ausführungsform ist mindestens eine Rampe, bevorzugst jedoch beide Rampen, in einem Übergangsbereich zwischen der Grundplatte und dem Stopfen angeordnet. In einer weiteren Ausführungsform ist mindestens eine Rampe, bevorzugst jedoch beide Rampen, an der Innenseite des röhrenförmigen Grundkörpers angebracht. Alternativ ist es aber ebenfalls möglich nur eine einzelne Rampe zu verwenden, welche ein einseitiges Abheben des Deckels bewirkt.

Alternativ oder ergänzend hierzu kann die erste oder die zweite Rampe durch ein Abstützelement ersetzt sein, welches den Deckel bezüglich des Grundkörpers in einer ersten Richtung abstützt, so dass beim gegenseitigen Zusammenschieben der Rampe und des Abstützelementes, welches durch das Zusammenschieben des Bedienelementes und des Gegenelementes hervorgerufen wird, die Grundplatte vom Grundkörper abgehoben wird.

Besonders gut haben sich Deckel bewährt, welche zusätzlich erste Rastmittel aufweisen, welche in einer Schliessstellung des Deckels mit zweiten Rastmitteln des Grundkörpers einrasten. Mit Vorteil sind diese ersten Rastmittel gegenüber den Rampen bezüglich einer Umfangsrichtung des Stopfens z.B. um 75°-115°, vorzugsweise 90°, versetzt angeordnet. Diese Versetzung bewirkt, dass bei dem Bedienen des mindestens einen Bedienelements, respektive dem Zusammenschieben des Grundkörpers, der Grundkörper wie oben beschrieben ovalisiert wird. Durch diese Verformung des Grundkörpers kann die Verrastung des Deckels mit dem Grundkörper über die ersten und zweiten Rastmittel aufgehoben werden, da die zweiten Rastmittel an der Seite des Grundkörpers angebracht sind, welche sich durch die Ovalisierung weiter von der Mittelachse, und damit von den ersten Rastmitteln entfernt. Hierfür ist es wichtig, dass sich ausschliesslich der Grundkörper verformt und nicht der Deckel. Nur durch die ausschliessliche Verformung des Grundkörpers entsteht eine räumliche Distanz zwischen den ersten und zweiten Rastmitten, so dass der Deckel bzw. der Stopfen des Deckels aus dem Grundkörper der Rohreinführung herausgehoben werden kann.

Um zu verhindern, dass der Deckel, insbesondere der Stopfen, sich ebenfalls verformt, wenn der Grundkörper zusammengeschoben wird, können z. B. am Grundkörper Aussparungen vorgesehen werden, welche sich vorzugsweise unterhalb der Bedienelemente an der Innenseite des röhrenförmigen Grundkörpers befinden. In diesem Fall sind die Aussparungen in der Schliessstellung des Deckels so angeordnet, dass beim Bestätigen des mindestens einen Bedienelementes lediglich zunächst die oben beschriebenen Rampen des Deckels mit dem Grundkörper in Verbindung treten und den Deckel aus der Öffnung heben, allerdings keine Verformung, respektive Ovalisierung des Deckels eingeleitet wird.

Vorzugsweise ist der Deckel über ein Scharnier mit dem Grundkörper wirkverbunden. Das Scharnier kann ein Bandscharnier und/oder ein Filmscharnier und/oder ein zusammengesetztes mehrteiliges Scharnier sein. Im Falle von nur einer Rampe ist diese vorzugsweise gegenüber von einem Scharnier angebracht.

Zusätzlich dazu kann der Deckel eine weitere Lasche aufweisen, die dem Anwender ermöglichst mit einer Hand die Bedienelemente zu betätigen und mit der anderen Hand an der Lasche zu ziehen um den Deckel von der Rohreinführung zu lösen.

Weiterhin kann die Rohreinführung einen Rohranschlag für das einzuführende Rohr umfassen. Ebenfalls förderlich ist, wenn die Rohreinführung Haltemittel aufweist, welche zum Fixieren des Rohres dienen. Diese Haltemittel können als Rastzungen ausgeformt sein, welche in die Lamellenstruktur eines Rohres eingreifen können. Hierzu reicht es aus, wenn den Rastzungen nur teilweise über den Umfang des Rohres verteilt sind, bzw. in dieses eingreifen.

In einer Ausführungsform kann das Haltemittel ergänzend einen Stutzen aufweisen, der konische Innenfläche aufweist, welche zur Halterung von Rohren verschiedener Durchmesser dient. Der Durchmesser der konischen Innenfläche ist dabei vorzugsweise zur Öffnung hin abnehmend ausgestaltet, so dass eine Klemmwirkung des in den Stutzen eingeführten Rohres erzielt wird. In der Regel ist die Querschnittsfläche des Stutzens fluchtend mit der Öffnung angeordnet, so dass ein in den Stutzen eingeführtes Rohr durch die Öffnung mit der Installationsdose zusammenwirkt, so dass z.B. einfach Kabel durch das Rohr durchgeführt werden können.

Das mindestens eine Bedienelement kann in einer Draufsicht in Richtung einer Mittelachse des röhrenförmigen Grundkörpers einen T-förmigen Querschnitt aufweisen, so dass zwischen einer Bedienfläche und einer Aussenfläche des röhrenförmigen Grundkörpers ein Steg gebildet wird. Das Bedienelement kann zur Befestigung eines Rödeldrahtes dienen, mittels dem das eizuführende Rohr an der Rohreinführung befestigt werden kann. Andere Querschnittsformen, wie beispielsweise ein geschlossener O-förmiger Querschnitt, sind ebenfalls denkbar. Je nach Anwendungsgebiet und Ausgestaltung kann das mindestens eine Bedienelement in die Aussenseite des röhrenförmigen Grundkörpers integriert sein, bzw. einen integralen Bestandteil davon bilden. In diesem Fall kann es sinnvoll sein, wenn der Abschnitt der Aussenseite, welcher als Bedienelement fungiert, optisch gekennzeichnet ist, so dass ein Installateur erkennt, an welcher Stelle an der Aussenseite er den Grundkörper zusammenschieben muss um den Deckel auszuwerfen. Dies kann z.B. durch eine farbliche, bzw. grafische Markierung oder eine andere Kennzeichnung erreicht werden.

Auch mindestens ein zusätzliches Dichtelement zur Abdichtung des Rohres kann vorhanden sein. Das Dichtelement kann beispielsweise zwischen dem eigeführten Rohr und dem Rohranschlag innerhalb des Grundkörpers angebracht sein und diese Elemente gegeneinander dichten. Alternativ oder ergänzend kann ebenfalls eine Dichtelement zwischen dem Deckel und einer Oberkante des röhrenförmigen Grundkörpers angebracht sein, so dass eine Abdichtung der Rohreinführung in der Schliessstellung erzeugt wird.

Die Rohreinführungen gemäss der Erfindung werden mit Vorteil aus Kunststoff, vorzugsweise durch Spritzgusstechnik, hergestellt, da die geometrischen Formen der Rohreinführungen gemäss der Erfindung sich besonders für die Herstellung durch Spritzgiessen eignen.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: eine erste Ausführungsform einer Rohreinführung welche in Schliessstellung in perspektivischer Ansicht, teilweise geschnitten dargestellt ist;
- Fig. 2: eine erste Ausführungsform einer Rohreinführung in einer geöffneten Stellung in perspektivischer Ansicht.

### BESCHREIBUNG DER AUSFÜHRUNGSFORMEN

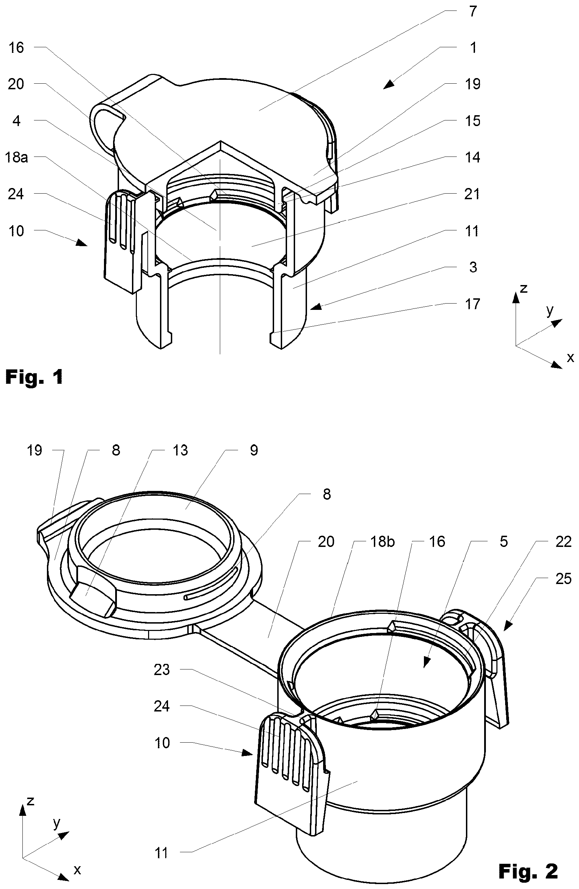

**Figur 1** zeigt eine perspektivische Darstellung einer ersten Ausführungsform einer Rohreinführung 1 für eine nicht näher dargestellte Installationsdose in einer Schliessstellung. Die Rohreinführung ist teilweise geschnitten dargestellt. **Figur 2** zeigt die Rohreinführung 1 aus **Figur 1** in einer geöffneten Stellung. Generell kann eine Installationsdose mehrere Rohreinführungen gemäss der Erfindung aufweisen. Diese sind in der Regel entlang einer oder mehrerer Seitenwände der Dose angeordnet.

Die Rohreinführung 1 gemäss der gezeigten Ausführungsform umfasst einen röhrenförmigen Grundkörper 3 mit einer Mittelachse 4 und einer Öffnung 5 zur Aufnahme eines Rohres 6, einen Deckel 7 zum Verschliessen der Öffnung 5 mit einer Grundplatte 8 und einem in einer Schliessstellung in die Öffnung 5 hineinragenden Stopfen 9. An einer Aussenseite 11 des röhrenförmigen Grundkörpers 3 sind ein Bedienelement 10 und ein Gegenelement 25 zueinander gegenüberliegend angebracht und an dem Grundkörper 3 angeformt. In der gezeigten Ausführungsform ist das Gegenelement 25 als ein weiteres Bedienelement 10 ausgeführt. In einer Draufsicht in Richtung der Mittelachse und in die Öffnung 5 (in negative z-Richtung) ist erkennbar, dass diese beiden Bedienelemente 10, 25 einen T-förmigen Querschnitt aufweisen, sodass das Bedienelement 10, 25 jeweils eine Bedienfläche 24 aufweist, welche von der Aussenseite 11 des Grundkörper 3 beabstandet ist und einen zu diesen Flächen im wesentlichen senkrechten Steg 23 aufweist. Weitergehend ist der Deckel 7 über ein Scharnier 20 mit dem Grundkörper 3 wirkverbunden. In der gezeigten Ausführungsform ist besagtes Scharnier 20 ein Bandscharnier.

Um den Deckel aus der Öffnung 5 auszuheben, müssen die beiden gegenüberliegende Bedienelemente 10, 25 zusammengedrückt werden. Dies bewirkt einerseits, dass die Grundplatte 8 des Deckels 7 mittels Rampen 13 von der Öffnung 5 abgehoben wird. Dadurch, dass der Grundkörper 3 unter den Bedienelementen 10,25 so verformt wird, dass die Innenseite 21 des röhrenförmigen Grundkörpers 3 an diesen Stellen näher zur Mittelachse 4 des Grundkörper 3 rückt, interagiert ein Teil der Innenseite 21 mit zwei Rampen 13 welche am Deckel 7 unterhalb der Bedienelemente 10, 25 angebracht sind. Ausführungsformen mit nur einer Rampe sind jedoch wie beschrieben ebenfalls denkbar. Die zwei einander gegenüberliegenden Rampen 13 sind in einem Übergangsbereich zwischen der Grundplatte 8 und dem Stopfen 9 angeordnet, so dass diese in Schliessstellung mit den zwei einander gegenüberliegenden Bedienelementen 10, 25 fluchten. Beim gegenseitigen Zusammendrücken der beiden Bedienelemente 10, 25 treten die Rampen 13 mit der Innenseite 21 des Grundkörpers 3 in Wirkverbindung, so dass die Formgebung der Rampen 13 bewirkt, dass der Stopfen 9 bzw. die Grundplatte 8 des Deckels 7 von der Öffnung 5 abgehoben wird. Zusätzlich verfügt der Deckel 7 über eine Lasche 19 welche von der Grundplatte 8 abgeht und einem Anwender ermöglichst mit einer Hand die Bedienelemente 10 zu betätigen und mit der anderen Hand an der Lasche 19 zu ziehen um den Deckel 7 von der Rohreinführung 1 zu lösen.

Weiterhin bewirkt das Bedienen der Bedienelemente 10, 25, dass der Grundkörper 3 ovalisiert wird. Aussparungen 22 am Grundkörper 3 verhindern, dass eine Kraftübertragung auf den Deckel 7 stattfindet, sodass dieser nicht verformt wird sondern seine im Wesentlichen runde Form behält. Durch die Ovalisierung des Grundkörpers 3 unabhängig vom Deckel 7 entfernen sich diejenigen Teile des Grundkörpers 3 bzw. des Deckels 7 voneinander, welche in bezüglich einer Umfangsrichtung des Stopfens 9 um ca. +/- 90° versetzt von den Bedienelementen 10 angeordnet sind. In der gezeigten Ausführungsform befinden sich an diesen Stellen jeweils erste Rastmittel 14 am Deckel 7 und zweite Rastmittel 15 am Grundkörper 3 welche in der Schliessstellung miteinander verrastet sind. Durch die Verformung des Grundkörpers 3 entfernen sich die jeweiligen Rastmittel 14,15 in radialer Richtung voneinander und wodurch die Verrastung aufgehoben wird und der Deckel 7 aus der Öffnung 5 entfernt werden kann. Dies wird über den oben beschriebenen Mechanismus über die Rampen 13 ausgeführt, welcher ebenfalls durch das Zusammenschieben der Bedienelemente 10, 25 ausgelöst wird. Somit ist der Auswerfmechanismus des Deckels mit dem mechanischen Lösen der Verrastung integral verbunden, obwohl diese Mechanismen örtlich voneinander getrennt liegen.

An der Innenseite 21 des röhrenförmigen Grundkörpers 3 sind weiterhin Haltemittel 16 ersichtlich, welche zum Fixieren des Rohres dienen. Die in dieser Ausführungsform gezeigten Haltemittel 16 haben die Form, von nach innen ragenden Rastzungen 16, welche in entsprechende Lamellen des Rohres eingreifen und dieses fixieren. Die Rastzungen 16, respektive die Haltemittel 16, sind in der gezeigten Variante nur teilweise über den Umfang der Innenseite 21 des Grundkörpers der Rohreinführung 1 angeordnet.

Ebenfalls ist ein Rohranschlag 17 vorhanden, welche die axiale Position (in z-Richtung) des einzuführenden Rohres festlegt. Zwischen dem Rohranschlag 17 und dem Rohr kann eine erstes Dichtelement 18a vorgesehen sein, welche das Rohr gegen die Rohreinführung 1 abdichtet. Ein zweites Dichtelement 18b in Form einer umlaufenden Dichtlippe ist in dieser Ausführungsform am Ende des röhrenförmigen Grundkörpers 3 vorgesehen, welches den Grundkörper 3 gegen den Deckel 7 in der Schliessstellung dichtet.

### BEZUGSZEICHEN

- 1: Rohreinführung
- 2: Installationsdose
- 3: Grundkörper
- 4: Mittelachse
- 5: Öffnung
- 6: Rohr
- 7: Deckel
- 8: Grundplatte
- 9: Stopfen
- 10: Bedienelement
- 11: Aussenseite
- 12: Rödelsteg
- 13: Rampen

- 14: Erste Rastmittel
- 15: Zweite Rastmittel
- 16: Haltemittel
- 17: Rohranschlag
- 18: Dichtelement
- 19: Lasche
- 20: Scharnier
- 21: Innenseite (Grundkörper)
- 22: Aussparung
- 23: Steg
- 24: Bedienfläche
- 25: Gegenelement

## Patentansprüche

1. Eine Rohreinführung (1) für eine Installationsdose (2), die Rohreinführung aufweisend
a. einen röhrenförmigen Grundkörper (3) mit einer Mittelachse (4) und einer Öffnung (5) zur Aufnahme eines Rohres (6),
b. einen Deckel (7) zum Verschliessen der Öffnung (5) mit einer Grundplatte (8) und einem in einer Schliessstellung in die Öffnung (5) hineinragenden Stopfen (9), sowie
c. mindestens ein Bedienelement (10), welches am Grundkörper (3) angeformt und an einer Aussenseite (11) des röhrenförmigen Grundkörpers (3) angebracht ist,
**dadurch gekennzeichnet, dass**
d. das mindestens eine Bedienelement (10) mit mindestens einem Gegenelement (25) zusammenwirkt, das ar dem Grundkörper (3) angeformt ist und im Wesentlichen gegenüber von dem mindestens einen Bedienelement (10) angebracht ist, und
dass die Rohreinführung (1) so ausgeführt ist, dass
e. bei einem gegenseitigen Zusammenschieben des Bedienelementes (10) und des Gegenelementes (25) in einer ersten Richtung (y) die Grundplatte (8) des Deckels (7) von der Öffnung (5) abgehoben wird, und
f. der Grundkörper (3) beim gegenseitigen Zusammenschieben des Bedienelementes (10) und des Gegenelementes (25) ovalisiert wird, und durch die temporäre Ovalisierung des Grundkörpers (3) gegenüber dem formtreuen Deckel (7) bestimmte Teile des Deckels (7) bzw. des Grundkörpers (3) zeitweise miteinander in Wirkverbindung treten.

2. Rohreinführung (1) nach Anspruch 1 **dadurch gekennzeichnet, dass** zwischen dem Deckel (7) und dem Grundkörper (3) eine erste und eine zweite einander gegenüberliegende Rampe (13) angeordnet ist, wobei die erste Rampe (13) zumindest in Schliessstellung des Deckels (7) mit dem mindestens einen Bedienelement (10) und die zweite Rampe (13) zumindest in Schliessstellung des Deckels (7) mit dem Gegenelement (25) wirkverbunden sind, so dass beim Zusammenschieben des Bedien- und des Gegenelementes (10, 25) die Grundplatte (8) durch mindestens eine der Rampen (13) von der Öffnung (5) abgehoben wird.

3. Rohreinführung (1) nach Anspruch 1 **dadurch gekennzeichnet, dass** zwischen dem Deckel (7) und dem Grundkörper (3) eine erste Rampe (13) und ein der ersten Rampe (13) gegenüberliegendes Abstützelement angeordnet ist, wobei die erste Rampe (13) zumindest in Schliessstellung des Deckels (7) mit dem mindestens einen Bedienelement (10) wirkverbunden ist und das Abstützelement den Deckel (7) bezüglich dem Grundkörper (3) in der ersten Richtung (y) abstützt, so dass beim Zusammenschieben des Bedien- und des Gegenelementes (10, 25) die Grundplatte (8) durch die erste Rampe (13) von der Öffnung (5) abgehoben wird und beim gegenseitigen Zusammenschieben der ersten Rampe (13) und dem Abstützelement die Grundplatte (8) vom Grundkörper (3) abgehoben wird.

4. Rohreinführung (1) nach Anspruch 1 **dadurch gekennzeichnet, dass** zwischen dem Deckel (7) und dem Grundkörper (3) eine zweite Rampe (13) und ein der zweiten Rampe (13) gegenüberliegendes Abstützelement angeordnet ist, wobei die zweite Rampe (13) zumindest in Schliessstellung des Deckels (7) mit dem mindestens einen Gegenelement (25) wirkverbunden ist und das Abstützelement den Deckel (7) bezüglich dem Grundkörper (3) in der ersten Richtung (y) abstützt, so dass beim Zusammenschieben des Bedien- und des Gegenelementes (10, 25) die Grundplatte (8) durch die zweite Rampe (13) von der Öffnung (5) abgehoben wird und beim gegenseitigen Zusammenschieben der zweiten Rampe (13) und dem Abstützelement die Grundplatte (8) vom Grundkörper (3) abgehoben wird.

5. Rohreinführung (1) nach einem der vorangehenden Ansprüche **dadurch gekennzeichnet, dass** das Gegenelement (25) ebenfalls ein Bedienelement (10) ist.

6. Rohreinführung (1) nach einem der vorangehenden Ansprüche **dadurch gekennzeichnet, dass** das mindestens eine Bedienelement (10) in einer Draufsicht (z) einen T-förmigen Querschnitt aufweist.

7. Rohreinführung (1) nach einem der vorangehenden Ansprüche **dadurch gekennzeichnet, dass** die Rohreinführung (1) einen Rohranschlag (17) für das einzuführende Rohr umfasst.

8. Rohreinführung (1) nach einem der vorangehenden Ansprüche **dadurch gekennzeichnet, dass** der Deckel (7) über ein Scharnier (20) mit dem Grundkörper (3) wirkverbunden ist.

9. Rohreinführung (1) nach Anspruch 8 **dadurch gekennzeichnet, dass** das Scharnier (20) ein Bandscharnier und/oderein Filmscharnier und/oderein zusammengesetztes mehrteiliges Scharnier ist.

10. Rohreinführung (1) nach einem der vorangehenden Ansprüche **dadurch gekennzeichnet, dass** der Deckel (7) erste Rastmittel (14) und der Grundkörper (3) zweite Rastmittel (15) aufweist, welche in Schliessstellung mit den ersten Rastmitteln (14) einrasten.

11. Rohreinführung (1) nach Anspruch 2 und 10 **dadurch gekennzeichnet, dass** die ersten Rastmittel (14) gegenüber den Rampen (13) bezüglich einer Umfangsrichtung des Stopfens (9) um 90° versetzt angeordnet sind.

12. Rohreinführung (1) nach einem der vorangehenden Ansprüche **dadurch gekennzeichnet, dass** die Rohreinführung (1) Haltemittel (16) aufweist, welche zum Fixieren des Rohres dienen.

13. Rohreinführung (1) nach einem der vorangehenden Ansprüche **dadurch gekennzeichnet, dass** ein Dichtelement (18) zur Abdichtung des Rohres vorhanden ist.

14. Installationsdose (2) welche mindestens eine Rohreinführung (1) nach einem der vorangehenden Ansprüche umfasst.

## Claims

1. A tube inlet (1) for an installation box (2), the tube inlet comprising:
a. a tubular main body (3), having a central axis (4) and an opening (5) for receiving a tube (6),
b. a cover (7) for closing the opening (5), which has a base plate (8) and a plug (9) which, in a closed position, protrudes into the opening (5), and
c. at least one control element (10), which is molded to the main body (3) and is provided on an outer side (11) of the tubular main body (3),
**characterized in that**
d. the at least one control element (10) interacts with at least one counterpart element (25), which is molded to the main body (3) and is provided essentially opposite the at least one control element (10), and
**in that** the tube inlet (1) is designed in such a way that,
e. during a mutual pushing-together of the control element (10) and the counterpart element (25) in a first direction (y), the base plate (8) of the cover (7) is lifted off from the opening (5), and,
f. during the mutual pushing-together of the control element (10) and the counterpart element (25), the main body (3) is ovalized, and, as a result of the temporary ovalization of the main body (3) in relation to the dimensionally stable cover (7), certain parts of the cover (7) or of the main body (3) are temporarily interconnected with one another.

2. Tube inlet (1) according to Claim 1, **characterized in that** a first and a second ramp (13), are arranged opposite to each other between the cover (7) and the main body (3), wherein the first ramp (13) is interconnected, at least in the closed position of the cover (7), to the at least one control element (10) and the second ramp (13) is interconnected, at least in the closed position of the cover (7), to the counterpart element (25) such that, during the pushing-together of the operator control and counterpart element (10, 25), the base plate (8) is lifted off from the opening (5) by way of at least one of the ramps (13).

3. Tube inlet (1) according to Claim 1, **characterized in that** a first ramp (13) and a support element situated opposite the first ramp (13) are arranged between the cover (7) and the main body (3), wherein the first ramp (13) is interconnected, at least in the closed position of the cover (7), to the at least one control element (10) and the support element supports the cover (7) with respect to the main body (3) in the first direction (y) such that, during the pushing-together of the control and counterpart element (10, 25), the base plate (8) is lifted off from the opening (5) by way of the first ramp (13) and, during the mutual pushing-together of the first ramp (13) and the support element, the base plate (8) is lifted off from the main body (3).

4. Tube inlet (1) according to Claim 1, **characterized in that** a second ramp (13) and a support element situated opposite the second ramp (13) are arranged between the cover (7) and the main body (3), wherein the second ramp (13) is interconnected, at least in the closed position of the cover (7), to the at least one counterpart element (25) and the support element supports the cover (7) with respect to the main body (3) in the first direction (y) such that, during the pushing-together of the control and counterpart element (10, 25), the base plate (8) is lifted off from the opening (5) by way of the second ramp (13) and, during the mutual pushing-together of the second ramp (13) and the support element, the base plate (8) is lifted off from the main body (3).

5. Tube inlet (1) according to one of the preceding claims, **characterized in that** the counterpart element (25) is likewise a control element (10).

6. Tube inlet (1) according to one of the preceding claims, **characterized in that** the at least one control element (10) has a T-shaped cross section in a top view (z) .

7. Tube inlet (1) according to one of the preceding claims, **characterized in that** the tube inlet (1) includes a tube stop (17) for the tube to be introduced.

8. Tube inlet (1) according to one of the preceding claims, **characterized in that** the cover (7) is interconnected to the main body (3) via a hinge (20).

9. Tube inlet (1) according to Claim 8, **characterized in that** the hinge (20) is a strap hinge and/or a integral hinge and/or an assembled multi-part hinge.

10. Tube inlet (1) according to one of the preceding claims, **characterized in that** the cover (7) comprises first latching means (14), and the main body (3) comprises second latching means (15) which, in the closed position, latch in with respect to the first latching means (14).

11. Tube inlet (1) according to Claims 2 and 10, **characterized in that** the first latching means (14) are arranged offset by 90° in relation to the ramps (13) with respect to a circumferential direction of the plug (9).

12. Tube inlet (1) according to one of the preceding claims, **characterized in that** the tube inlet (1) comprises retaining means (16) which serve for fixing the tube.

13. Tube inlet (1) according to one of the preceding claims, **characterized in that** a sealing element (18) for sealing off the tube is provided.

14. Installation box (2) including at least one tube inlet (1) according to one of the preceding claims.

## Revendications

1. Entrée de tube (1) pour une boîte d'installation (2), l'entrée de tube comprenant
a. un corps de base tubulaire (3) ayant un axe central (4) et une ouverture (5) pour recevoir un tube (6),
b. un couvercle (7) pour fermer l'ouverture (5) ayant une plaque de base (8) et un bouchon (9) faisant saillie dans l'ouverture (5) dans une position de fermeture, ainsi que
c. au moins un élément de commande (10), qui est moulé sur le corps de base (3) et disposé sur un côté extérieur (11) du corps de base tubulaire (3),
**caractérisé en ce que**
d. l'au moins un élément de commande (10) interagit avec au moins un contre-élément (25), qui est moulé sur le corps de base (3) et qui est disposé essentiellement à l'opposé de l'au moins un élément de commande (10), et **en ce que** l'entrée de tube (1) est réalisée de telle sorte que
e. lorsque l'élément de commande (10) et le contre-élément (25) sont poussés mutuellement l'un vers l'autre dans une première direction (y), la plaque de base (8) du couvercle (7) est levage de l'ouverture (5), et
f. le corps de base (3) est ovalisé lorsque l'élément de commande (10) et le contre-élément (25) sont poussés mutuellement l'un vers l'autre, et grâce à l'ovalisation temporaire du corps de base (3) par rapport au couvercle (7) de forme fidèle, des parties déterminées du couvercle (7) ou du corps de base (3) viennent temporairement en liaison active les unes avec les autres.

2. Entrée de tube (1) selon la revendication 1, **caractérisée en ce que** entre le couvercle (7) et le corps de base (3) une première et une deuxième rampe (13) sont agencée opposées l'une à l'autre s, la première rampe (13) étant reliée activement à au moins le élément de commande (10) au moins dans la position de fermeture du couvercle (7) et la deuxième rampe (13) étant reliée activement au contre-élément (25) au moins dans la position de fermeture du couvercle (7), de telle sorte que lorsque l'élément de commande et le contre-élément (10, 25) sont poussés l'un vers l'autre, la plaque de base (8) est levage de l'ouverture (5) par au moins l'une des rampes (13).

3. Entrée de tube (1) selon la revendication 1, **caractérisée en ce qu'**une première rampe (13) et un élément de support opposé à la première rampe (13) sont agencés entre le couvercle (7) et le corps de base (3), la première rampe (13) étant reliée activement à au moins un élément de commande (10) au moins dans la position de fermeture du couvercle (7) et l'élément de support soutenant le couvercle (7) par rapport au corps de base (3) dans la première direction (y), de telle sorte que lorsque l'élément de commande et le contre-élément (10, 25) sont poussés l'un vers l'autre, la plaque de base (8) est soulevée de l'ouverture (5) par la première rampe (13) et lorsque la première rampe (13) et l'élément de support sont poussés l'un vers l'autre, la plaque de base (8) est levage du corps de base (3).

4. Entrée de tube (1) selon la revendication 1, **caractérisée en ce qu'**entre le couvercle (7) et le corps de base (3) est agencée une deuxième rampe (13) et un élément de support opposé à la deuxième rampe (13), la deuxième rampe (13) étant reliée activement à l'au moins un contre-élément (25) au moins dans la position de fermeture du couvercle (7) et l'élément de support soutenant le couvercle (7) par rapport au corps de base (3) dans la première direction (y), de telle sorte que lorsque l'élément de commande et le contre-élément (10, 25) sont poussés l'un vers l'autre, la plaque de base (8) est levage de l'ouverture (5) par la deuxième rampe (13) et lorsque la deuxième rampe (13) et l'élément de support sont poussés mutuellement l'un vers l'autre, la plaque de base (8) est soulevée du corps de base (3).

5. Entrée de tube (1) selon l'une quelconque des revendications précédentes, **caractérisée en ce que** le contre-élément (25) est également un élément de commande (10) .

6. Entrée de tube (1) selon l'une quelconque des revendications précédentes, **caractérisée en ce que** l'au moins un élément de commande (10) présente une section transversale en forme de T dans une vue de dessus (z).

7. Entrée de tube (1) selon l'une quelconque des revendications précédentes, **caractérisée en ce que** l'entrée de tube (1) comprend une butée de tube (17) pour le tube à insérer.

8. Entrée de tube (1) selon l'une quelconque des revendications précédentes, **caractérisée en ce que** le couvercle (7) est relié activement au corps de base (3) par une charnière (20).

9. Entrée de tube (1) selon la revendication 8, **caractérisée en ce que** la charnière (20) est une charnière à bande et/ou une charnière à film et/ou une charnière composée de plusieurs parties.

10. Entrée de tube (1) selon l'une quelconque des revendications précédentes, **caractérisée en ce que** le couvercle (7) présente des premiers moyens d'encliquetage (14) et le corps de base (3) des deuxièmes moyens d'encliquetage (15), qui s'encliquètent en position de fermeture avec les premiers moyens d'encliquetage (14).

11. Entrée de tube (1) selon les revendications 2 et 10, **caractérisée en ce que** les premiers moyens d'encliquetage (14) sont agencés de manière décalée de 90° par rapport aux rampes (13) au regard d'une direction périphérique du bouchon (9).

12. Entrée de tube (1) selon l'une quelconque des revendications précédentes, **caractérisée en ce que** l'entrée de tube (1) présente des moyens de maintien (16) qui servent à fixer le tube.

13. Entrée de tube (1) selon l'une quelconque des revendications précédentes, **caractérisée en ce qu'**un élément d'étanchéité (18) est présent pour étanchéifier le tube.

14. Boîte d'installation (2) qui comprend au moins une entrée de tube (1) selon l'une quelconque des revendications précédentes.
